(19) Europäisches Patentamt / European Patent Office / Office européen des brevets

(11) **EP 3 120 669 B1**

(12) **EUROPÄISCHE PATENTSCHRIFT**

(45) Veröffentlichungstag und Bekanntmachung des Hinweises auf die Patenterteilung:
**31.07.2024 Patentblatt 2024/31**

(21) Anmeldenummer: **15711718.5**

(22) Anmeldetag: **18.03.2015**

(51) Internationale Patentklassifikation (IPC):
**H05B 45/20** (2020.01)     **H05B 47/10** (2020.01)
**H05B 47/18** (2020.01)

(52) Gemeinsame Patentklassifikation (CPC):
**H05B 45/20; H05B 47/10; H05B 47/18**

(86) Internationale Anmeldenummer:
**PCT/EP2015/055615**

(87) Internationale Veröffentlichungsnummer:
**WO 2015/140193 (24.09.2015 Gazette 2015/38)**

(54) **VERFAHREN UND VORRICHTUNG ZUM BETREIBEN EINER LEUCHTE MIT MEHREREN LEUCHTMITTELN ODER GRUPPEN VON LEUCHTMITTELN**

METHOD AND DEVICE FOR OPERATING A LAMP HAVING MULTIPLE LIGHT MEANS OR A GROUP OF LIGHT MEANS

PROCÉDÉ ET APPAREIL POUR FAIRE FONCTIONNER UNE LAMPE COMPORTANT UNE PLURALITÉ DE MOYENS LUMINEUX OU DE GROUPES DE MOYENS LUMINEUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.03.2014 DE 102014205301**

(43) Veröffentlichungstag der Anmeldung:
**25.01.2017 Patentblatt 2017/04**

(73) Patentinhaber: **Zumtobel Lighting GmbH**
**6850 Dornbirn (AT)**

(72) Erfinder: **WERNER, Walter**
**6850 Dornbirn (AT)**

(74) Vertreter: **Thun, Clemens**
**Mitscherlich PartmbB**
**Patent- und Rechtsanwälte**
**Karlstraße 7**
**80333 München (DE)**

(56) Entgegenhaltungen:
EP-A1- 2 475 227     EP-A2- 1 135 005
EP-A2- 2 247 166     WO-A1-2013/110024
WO-A2-2007/141732    DE-A1- 102004 061 294
DE-A1- 102006 028 670    US-B1- 7 315 139

**Beschreibung**

Die vorliegende Erfindung betrifft ein Verfahren zum Betreiben einer Leuchte, welche mehrere Leuchtmittel oder Gruppen von Leuchtmitteln aufweist, die getrennt voneinander in ihrer Lichtabgabe beeinflusst werden können. Ferner betrifft die vorliegende Erfindung eine entsprechende Leuchte sowie eine Steuereinheit für eine derartige Leuchte.

Die EP 2 247 166 A2 beschreibt ein Steuergerät zum Ansteuern einer Leuchte, wobei mit dem Steuergerät zumindest zwei Betriebsgeräte zum Betreiben von an den Betriebsgeräten angeschlossenen Lichtquellen gekoppelt sind. Die Lichtquellen können hierbei Leuchtstofflampen oder LEDs sein, wobei das Steuergerät die Betriebsgeräte derart individuell ansteuert, dass alle Lichtquellen die gleiche Helligkeit aufweisen.

Die WO 2013/110024 A1 beschäftigt sich mit Techniken zur Beleuchtungssteuerung und offenbart entsprechende Steuergeräte und Betriebsgeräte. Hierbei empfängt das Steuergerät oder das Betriebsgerät mehrere Dimm-Eingangssignale und hat mehrere Dimm-Schnittstellen, die anfängliche Dimmsignale oder -pegel erzeugen. Die anfänglichen Dimmsignale werden von einem Steuergerät verarbeitet, um ein endgültiges Ausgangsdimmsignal oder -niveau zu erzeugen, das auf den empfangenen Dimmsignalen basiert und die angeschlossenen Lichtquellen entsprechend dimmt.

Aus dem Stand der Technik sind Leuchten bekannt, welche mehrere getrennte Einheiten zur Lichtabgabe aufweisen, die voneinander unabhängig angesteuert werden können. Im einfachsten Fall handelt es sich bspw. um Leuchten, welche einerseits Leuchtmittel für eine direkte Lichtabgabe und andererseits Leuchtmittel für eine indirekte Lichtabgabe aufweisen. Auch die direkte Lichtabgabe kann dann nochmals unterteilt sein in einen stark gerichteten Anteil, der bspw. zur Beleuchtung von Arbeitsplätzen oder zur gezielten Beleuchtung von Objekten genutzt wird, und einen diffusen Lichtanteil, über den eine eher großflächige aber weniger intensive Zusatz- oder Hintergrundbeleuchtung geschaffen wird. Schließlich kommen in letzter Zeit auch vermehrt Leuchten zum Einsatz, welche einzelne sog. Leuchtmodule aufweisen, die bspw. in einer länglichen Anordnung hintereinander oder matrixartig angeordnet sind, wobei denn wiederum die einzelnen Leuchtmodule individuell in ihrer Helligkeit und/oder auch im Hinblick auf die Frage des Farborts des abgegebenen Lichts eingestellt werden können.

Bei all diesen komplexen Leuchten stellt sich die Frage, inwiefern diese komfortabel von einer Zentrale aus angesteuert werden können. Üblicherweise sind Leuchten, die in größeren Gebäuden oder Gebäudekomplexen zum Einsatz kommen, in große Beleuchtungssysteme eingebunden, wobei die Ansteuerung der Leuchten zumindest teilweise von einer Zentrale des Systems vorgenommen wird. Diese zentrale Steuereinheit übermittelt hierzu in der Regel digitale Befehle für die Helligkeits- oder Farbsteuerung an die einzelnen Leuchten.

Im Rahmen der digitalen Beleuchtungssteuerung hat sich dabei in den letzten Jahren insbesondere der sog. DALI (Digital Adressable Lighting Interface)-Standard durchgesetzt. Es handelt sich um einen Kommunikationsstandard zur Übermittlung von Befehlen für die Beleuchtungssteuerung, mit dem insbesondere Helligkeitsstellwerte an die an das System angeschlossenen Leuchten übertragen werden können, die dann von den Leuchten in entsprechender Weise umgesetzt werden. Im Rahmen des DALI-Standards ist dabei jedem Helligkeitsbefehl eine Adressinformation zugeordnet, die Auskunft darüber gibt, welcher Teilnehmer des Systems den von der Zentrale gesendeten Befehl umsetzen soll. Hierbei ist den Leuchten in der Regel eine individuelle Betriebsadresse zugewiesen, wobei die Leuchten dann auf Basis dieser entsprechenden Betriebsadresse individuell angesteuert werden können. Ergänzend hierzu besteht auch die Möglichkeit, mehrere Leuchten einer Gruppe zuzuordnen, die im Rahmen eines entsprechenden Gruppen-Befehls kollektiv angesteuert wird und sich dann entsprechend gleichartig verhält.

Um tatsächlich sicherzustellen, dass bspw. jede Leuchte eines DALI-Systems individuell angesteuert werden kann, ist es also erforderlich, dass jeder Leuchte ihre eigene Betriebsadresse zugewiesen wird. Aus dem Stand der Technik ist es deshalb bekannt, bei Leuchten der oben beschriebenen Art, welche mehrere unabhängig voneinander steuerbare Einheiten zur Lichtabgabe aufweisen, den Leuchten mehrere DALI-Adressen zuzuweisen, welche dann jeweils zur Steuerung der einzelnen Einheiten genutzt werden.

Diese aus dem Stand der Technik bekannte Vorgehensweise hat sich in der Vergangenheit zwar bewährt, allerdings ist sie mit dem Nachteil verbunden, dass derartige Leuchten dann jeweils mehrere DALI-Adressen belegen. Dies ist insofern problematisch, als entsprechend dem DALI-Standard nur eine begrenzte Anzahl von Adressen zur Verfügung steht, also nicht eine beliebige Anzahl von Adressen vergeben werden kann. In der derzeitigen Version können innerhalb eines DALI-Systems maximal 64 Betriebsadressen vergeben werden, so dass bei der oben beschriebenen Vorgehensweise die Anzahl an tatsächlich ansteuerbaren Leuchten deutlich reduziert wird. Dieses Problem verstärkt sich umso mehr, je komplexer die einzelnen Leuchten aufgebaut sind, d.h., je mehr individuell steuerbare Leuchteinheiten die Leuchten aufweisen.

Darüber hinaus ist zu berücksichtigen, dass der DALI-Standard nicht unbedingt für eine umfangreiche und insbesondere schnelle Datenkommunikation ausgelegt ist. Die Stärke des DALI-Standards liegt darin, dass mit relativ kurzen und einfachen Befehlen Leuchten in ihrer Helligkeit eingestellt werden können. Wäre es nunmehr erforderlich, zum Ansteuern einer Leuchte eine Vielzahl von DALI-Helligkeitsbefehlen zu übermitteln, so würde dies die Effizienz der Helligkeitssteuerung deutlich beeinträchtigen.

Der vorliegenden Erfindung liegt deshalb die Aufgabenstellung zugrunde, eine neuartige Lösung zum Ansteuern komplexerer Leuchten zur Verfügung zu stellen, bei der die oben beschriebenen Nachteile zumindest teilweise vermieden werden.

Die Aufgabe wird durch ein Verfahren zum Betreiben einer Leuchte mit den Merkmalen des Anspruchs 1 sowie durch eine Steuereinheit für eine Leuchte gemäß Anspruch 6 gelöst. Vorteilhafte Weiterbildungen der Erfindung sind Gegenstand der abhängigen Ansprüche.

Die erfindungsgemäße Lösung beruht auf dem Gedanken, der Steuereinheit der Leuchte eine Anzahl externer Helligkeitssollwerte zuzuführen. Die Anzahl dieser extern zugeführten Helligkeitssollwerte, die also dann beispielsweise von der zentralen Steuereinheit des Beleuchtungssystems stammen, liegt dabei unterhalb der Anzahl der individuell steuerbaren Einheiten der Leuchte, wobei allerdings auf Basis dieser extern zugeführten Werte für jede steuerbare Einheit jeweils ein interner Helligkeitssollwert ermittelt wird. Dies erfolgt dadurch, dass alle externen Helligkeitssollwerte unter Berücksichtigung eines jeweils individuellen Gewichtungsfaktors zu dem internen Helligkeitssollwert beitragen.

Erfindungsgemäß wird also ein Verfahren zum Betreiben einer Leuchte mit mehreren individuell steuerbaren Einheiten zur Lichtabgabe vorgeschlagen, wobei die Leuchte weiterhin ein Steuergerät aufweist, und wobei dem Steuergerät der Leuchte mehrere externe Helligkeitssollwerte übermittelt werden und vom Steuergerät empfangen werden, und dann vom Steuergerät für jede steuerbare Einheit der Leuchte jeweils auf Basis aller empfangenen externen Helligkeitssollwerte unter Berücksichtigung zugehöriger Gewichtungsfaktoren ein interner Helligkeitssollwert ermittelt wird.

Weiterhin wird zum Ermitteln des jeweiligen internen Helligkeitssollwerts für jede der individuell steuerbaren Einheiten zur Lichtabgabe jeder empfangene externe Helligkeitssollwert mit einem jeweiligen zugehörigen Gewichtungsfaktor der zugehörigen Gewichtungsfaktoren multipliziert, wobei der jeweilige interne Helligkeitssollwert die Summe der gewichteten externen Helligkeitssollwerte ist. Ferner wird jede der mehreren individuell steuerbaren Einheiten zur Lichtabgabe entsprechend des jeweiligen ermittelten internen Helligkeitssollwerts durch das Steuergerät angesteuert. Die Gewichtungsfaktoren sind hierbei in Form einer Gewichtungsmatrix zusammengefasst und in der Steuereinheit der Leuchte gespeichert.

Ferner wird erfindungsgemäß eine Steuereinheit für eine Leuchte mit mehreren steuerbaren Einheiten für die Lichtabgabe vorgeschlagen, wobei die Steuereinheit der Leuchte dazu ausgebildet ist, mehrere externe Helligkeitssollwerte zu empfangen und für jede der individuell steuerbaren Einheiten zur Lichtabgabe der Leuchte dann jeweils auf Basis aller empfangenen externen Helligkeitssollwerte unter Berücksichtigung zugehöriger Gewichtungsfaktoren einen jeweiligen internen Helligkeitssollwert zu ermitteln. Ferner ist die Steuereinheit dazu ausgebildet, zum Ermitteln des jeweiligen internen Helligkeitssollwerts jeden empfangenen externen Helligkeitssollwert mit einem zugehörigen Gewichtungsfaktor der zugehörigen Gewichtungsfaktoren zu multiplizieren und anschließend die Summe der gewichteten externen Helligkeitssollwerte zu bilden. Hierbei ist der jeweilige interne Helligkeitssollwert die Summe der jeweiligen gewichteten externen Helligkeitssollwerte. Weiterhin ist die Steuereinheit dazu ausgebildet, die mehreren individuell steuerbaren Einheiten zur Lichtabgabe entsprechend des jeweiligen ermittelten internen Helligkeitssollwerts anzusteuern. Die Gewichtungsfaktoren sind in Form einer Gewichtungsmatrix zusammengefasst und in einem Speicher der Steuereinheit gespeichert.

Entscheidend für den sich letztendlich ergebenden internen Helligkeitssollwert, also demjenigen Helligkeitswert, bei dem die zugehörige Einheit zur Lichtabgabe tatsächlich betrieben wird, sind also die oben erwähnten Gewichtungsfaktoren. Diese sind übersichtlicherweise in einer sog. Gewichtungsmatrix zusammengefasst, wobei durch die einzelnen Einträge der Matrix dann jeweils der Zusammenhang zwischen einem extern zugeführten Helligkeitssollwert und einer einzelnen steuerbaren Einheit hergestellt wird. Hierdurch besteht die Möglichkeit, das Umsetzen der extern zugeführten Helligkeitssollwerte durch die Steuereinheit der Leuchte in gezielter Weise zu beeinflussen. Beispielsweise kann durch die Gewichtungsmatrix ein bestimmtes Helligkeitsprofil definiert werden, welches - für den Fall, dass mehrere Leuchteinheiten in einer länglichen Anordnung hintereinander angeordnet sind - den Helligkeitsverlauf in Längsrichtung hinweg beschreibt, wobei allerdings die absoluten Helligkeitswerte durch die externen Sollwerte festgelegt werden.

Praktischerweise werden in der Steuereinheit der Leuchte mehrere entsprechende Gewichtungsmatrizen gespeichert, welche dann unterschiedliche Profile der Lichtabgabe definieren. Durch den Verbraucher oder über die zentrale Steuereinheit des Systems kann dann eine der Matrizen ausgewählt werden, welche dann die Umsetzung der extern zugeführten Helligkeitssollwerte festlegt. Wie bereits erwähnt, handelt es sich aus praktischen Gründen um vorab hinterlegte Gewichtungsmatrizen, die jeweils einem bestimmten Beleuchtungsprofil entsprechen. Es wäre allerdings auch denkbar, dass durch spezielle Maßnahmen Einfluss auf die Matrizeneinträge genommen werden kann und dementsprechend das entsprechende Verhalten der Leuchte individuell durch den Verbraucher programmiert werden kann.

Gemäß einer vorteilhaften Weiterbildung des oben beschriebenen Konzepts kann dabei vorgesehen sein, dass für den Endverbraucher die Möglichkeit besteht, die Anzahl der extern zugeführten Helligkeitssollwerte einzustellen. Hierdurch wird also vorgegeben, wie viele DALI-Adressen die Leuchte belegen soll, wobei selbstverständlich die Möglichkeiten zur individuellen Einflussnahme auf die Helligkeitsabgabe größer werden, je höher die Anzahl der genutzten DALI-Adressen ist. Eine geringere Anzahl an DALI-Adressen führt hingegen zu einer Reduzierung der Möglichkeiten zur Einflussnahme, allerdings belegt die Leuchte dann auch dementsprechend weniger Adressen, d.h., es können insgesamt mehr Leuchten an das DALI-System angeschlossen werden. Darüber hinaus wirkt sich die Anzahl der genutzten DALI-Adressen selbstverständlich auf den Umfang der insgesamt zu übermittelnden Daten und damit auf die Geschwindigkeit der Helligkeitsansteuerung insgesamt aus. Abhängig von der Anzahl der genutzten Adressen muss dann eine entsprechend dafür ausgelegt Gewichtungsmatrix gewählt werden.

Eine andere Weiterbildung des erfindungsgemäßen Konzepts besteht in der Nutzung der im DALI-Standard bereits vorgesehenen sog. Szene-Befehlen. Es handelt sich hierbei um Befehle, welche nicht direkt Helligkeitssollwerte beinhalten, sondern stattdessen die Leuchte dazu veranlassen, auf in einem Speicher der Leuchte hinterlegte, vorab gespeicherte Helligkeitswerte zurückzugreifen. Komplexere Beleuchtungseinstellungen für eine Leuchte müssen in diesem Fall dann nicht aufwendig mit Hilfe zahlreicher Befehle übermittelt werden, sondern die Leuchte kann stattdessen auf vorgespeicherte Informationen zurückgreifen.

Auch das erfindungsgemäße Konzept kann die Nutzung derartiger Szene-Befehle vorsehen, was bereits insofern wünschenswert ist, als selbstverständlich die Leuchte gemäß dem DALI-Standard funktionieren sollte. Im vorliegenden Fall kann nunmehr eine Ergänzung dahingehend bestehen, dass bei Übermittlung eines entsprechenden Szene-Befehls, der wiederum die Leuchte dazu veranlasst, auf vorab hinterlegte Helligkeitssollwerte zuzugreifen, zusätzlich auch vorgegeben wird, welche zugehörige Gewichtungsmatrix ausgewählt wird. In Kombination mit der Gewichtungsmatrix ist nämlich wiederum sichergestellt, dass die vorab hinterlegten Werte in korrekter Weise zur Ansteuerung der individuellen Einheiten umgesetzt werden.

Letztendlich bedeutet dies also, dass gemäß dem erfindungsgemäßen Konzept eine Leuchte voll kompatibel gemäß dem DALI-Standard arbeiten kann, wobei trotz allem die Möglichkeit besteht, mit einem verhältnismäßig geringen Aufwand hinsichtlich der zu übermittelnden Daten Einfluss auf eine Vielzahl individuell steuerbarer Einheiten zur Lichtabgabe nehmen zu können. Dies stellt einen deutlichen Vorteil gegenüber bislang bekannten, oben beschriebenen Lösungen dar.

Dabei ist darauf hinzuweisen, dass das erfindungsgemäße Konzept nicht zwingend auf Basis des DALI-Standards durchgeführt werden muss, sich allerdings insbesondere in diesem Fall sehr deutliche Vorteile ergeben.

Nachfolgend soll die Erfindung anhand der beiliegenden Zeichnung näher erläutert werden. Es zeigen:

Figuren 1 bis 3    Ansichten einer Leuchte, bei der das erfindungsgemäße Steuerungskonzept zum Einsatz kommen soll;

Figuren 4 und 5    Ansichten eines bei der Leuchte der Figuren 1 bis 3 zum Einsatz kommenden Leuchtmoduls;

Figur 6    schematisch ein DALI-Beleuchtungssystem mit einer erfindungsgemäßen Leuchte;

Figur 7    schematisch die Vorgehensweise zum Berechnen der internen Helligkeitswerte für die einzelnen Einheiten;

Figur 8    ein Beispiel einer Gewichtungsmatrix;

Figur 9    ein Beispiel zur Berechnung der individuellen Helligkeitswerte gemäß dem erfindungsgemäßen Konzept und

Figuren 10 bis 12    verschiedene Beispiele zur variable Beleuchtungssteuerung einer Leuchte gemäß der vorliegenden Erfindung.

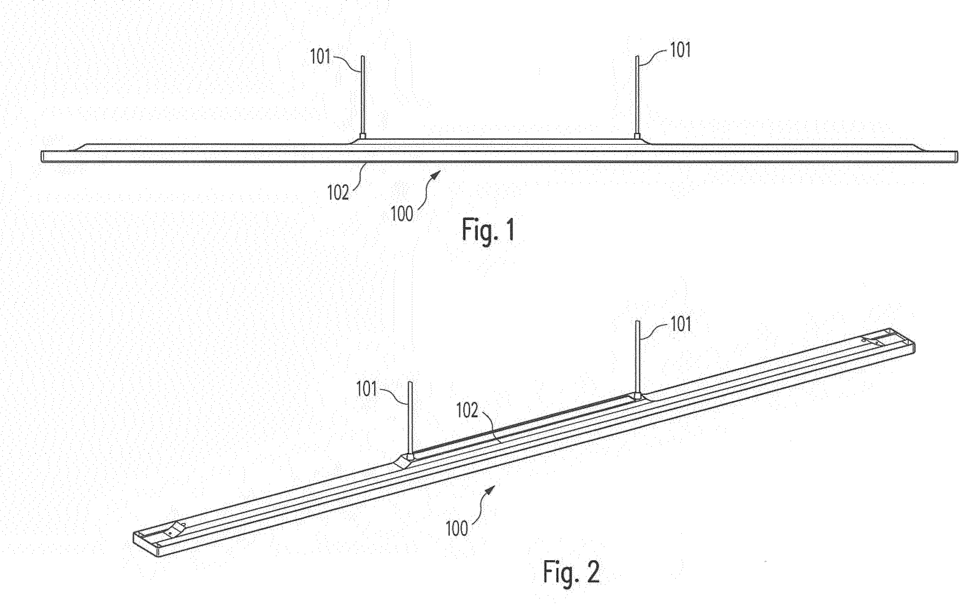

Anhand der Figuren 1 bis 5 soll zunächst eine Leuchte erläutert werden, bei der in besonders vorteilhafter Weise das erfindungsgemäße Konzept zur Steuerung einer Vielzahl von Leuchteinheiten zum Einsatz kommt. Selbstverständlich ist allerdings die Erfindung keinesfalls auf diese dargestellte konkrete Ausführungsform einer Leuchte beschränkt, sondern kann immer dann zum Einsatz kommen, wenn eine Leuchte mehrere getrennt voneinander steuerbare Einheiten zur Lichtabgabe aufweist.

Dargestellt ist dabei zunächst in den Figuren 1 und 2 in zwei unterschiedlichen Ansichten eine allgemein mit dem Bezugszeichen 100 versehene Leuchte, welche im dargestellten Ausführungsbeispiel als Pendelleuchte ausgebildet ist und über wenigstens ein Aufhängelement, im vorliegenden Fall über zwei Seile 101 an einem nicht dargestellten Trägerelement, bspw. an der Decke eines Raums befestigt wird. In gleicher Weise könnte die Leuchte 100 allerdings auch als Deckenanbauleuchte genutzt werden.

Wie in den Figuren erkennbar ist, ist die Leuchte 100 insgesamt länglich ausgeführt. Ihre Form wird hierbei in erster Linie durch ein Trägerelement 102 festgelegt, welches das zentrale Element der Leuchte 100 darstellt und an dem alle weiteren Komponenten angeordnet bzw. befestigt sind. Das Trägerelement 102 weist dabei an seiner Unterseite bzw. der Lichtabstrahlseite der Leuchte 100 einen im Querschnitt etwa U-förmigen Aufnahmebereich auf, in dem mehrere Leuchtmodule auswechselbar angeordnet werden.

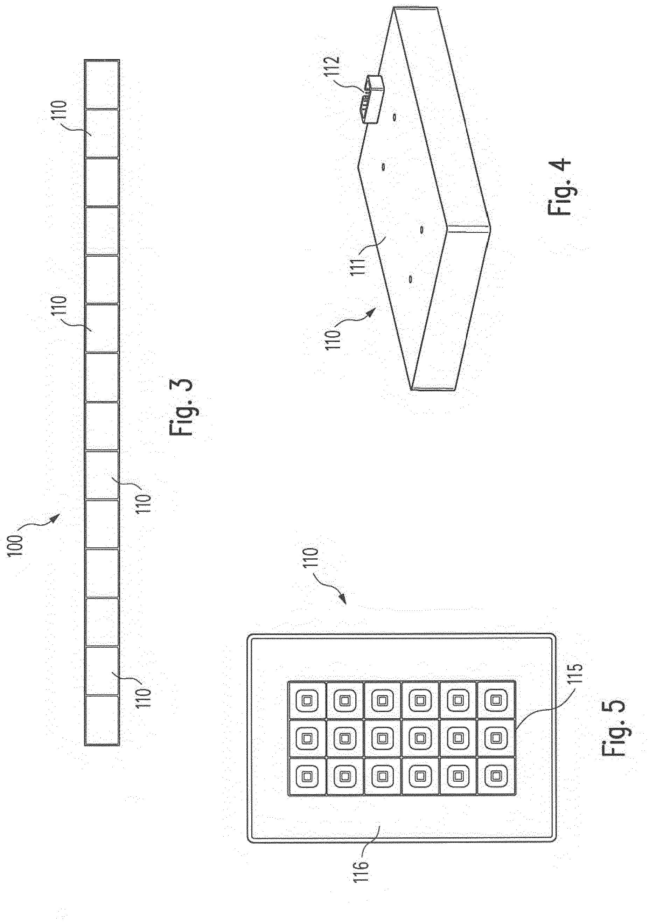

Zwei Ansichten eines derartigen Leuchtmoduls sind in den Figuren 4 und 5 gezeigt, wobei Figur 4 eine perspektivische Ansicht des Leuchtmoduls von der Oberseite her und Figur 5 die Unterseite, über welche das Licht abgegeben wird, zeigt. Wie erkennbar ist, ist das Leuchtmodul 110 etwa kastenförmig ausgebildet und weist an seiner Rückseite 111 - nicht näher dargestellte - Mittel zur mechanischen Befestigung an dem Trägerelement 102 sowie Mittel zur elektrischen Kontaktierung von Stromversorgungs- und Steuerleitungen auf. Insbesondere diese Kontaktierungsmittel werden durch einen Stecker 112 gebildet, der beim Einsetzen des Moduls 110 in den Aufnahmebereich des Trägerelements 102 mit entsprechenden Gegensteckerelementen der Leuchte 100 gekoppelt und damit mit einer Steuereinheit der Leuchte 100 verbunden wird. Im eingesetzten Zustand ist also das Leuchtmodul 110 nicht nur mechanisch an dem Trägerelement 102 befestigt, sondern auch elektrisch mit der Steuereinheit der Leuchte 100 verbunden. Dies eröffnet für die Steuereinheit der Leuchte 100 die Möglichkeit, das Modul 110 mit Strom zu versorgen sowie individuell anzusteuern, um beispielsweise die Helligkeit der Lichtabgabe einzustellen.

Für die Lichtabgabe sind innerhalb des Moduls 110 mehrere - nicht näher dargestellte - LEDs angeordnet. Diese LEDs sind matrixartig angeordnet, wobei die Lichtabgabe beim dargestellten Ausführungsbeispiel auf zwei verschiedene Arten erfolgt. Wie nämlich der Ansicht des Moduls 110 von unten gemäß Figur 5 entnommen werden kann, sind im zentraleren Bereich mehrere Linsen 115 in einer 3x6-Matrix angeordnet. Jeder Linse ist dabei eine LED zugeordnet, so dass das entsprechende Licht dann über die zugeordnete Linse 115 gerichtet zur Unterseite hin abgestrahlt wird. Über diese Lichtabgabe wird also bspw. eine intensive und gezielte Beleuchtung eines Arbeitsplatzes oder eines anderen Objekts erzielt. Im Umfangsbereich dieser LED-Linsen-Matrix befindet sich ein rahmenartiger zusätzlicher Bereich 116, dem ebenfalls LEDs zugeordnet sind. Dieser Rahmenbereich 116 ist dabei derart ausgeführt, dass über ihn abgegebenes Licht eher diffus abgestrahlt wird. Letztendlich bedeutet dies, dass das Modul 110 in zwei verschiedenen Arten Licht abgibt, einerseits in Form einer gerichteten Lichtabgabe über die Linsen 115 sowie andererseits diffus über den umlaufenden Rahmen 116.

Wie bereits erwähnt, sind in dem Aufnahmebereich des Trägerelements 102 mehrere derartige Module 110 angeordnet, sodass sich von der Unterseite her eine Ansicht der Leuchte 100 ergibt, wie sie in Figur 3 gezeigt ist. Erkennbar ist also, dass im dargestellten Ausführungsbeispiel insgesamt 14 Leuchtmodule 110 zum Einsatz kommen, welche im Prinzip identisch ausgestaltet sind, aber grundsätzlich jeweils individuell angesteuert werden können. Genaugenommen wäre es denkbar, dass bei der Ansteuerung der einzelnen Module 110 nochmals zwischen den Lichtquellen für die gerichtete Lichtabgabe sowie den Lichtquellen für die diffuse Lichtabgabe unterschieden wird. In diesem Fall würden also im Hinblick auf eine Lichtabgabe zur Unterseite der Leuchte 100 hin sogar 28 (14 x 2) unabhängig voneinander in ihrer Lichtabgabe einstellbare LED-Gruppen bzw. Einheiten vorliegen. Zur Vereinfachung der nachfolgenden Erläuterungen soll allerdings zunächst davon ausgegangen werden, dass keine Trennung zwischen gerichteter und diffuser Lichtabgabe vorliegt. Ferner sollen auch evtl. zusätzliche Leuchtmittel, die beispielsweise für eine indirekte Lichtabgabe zur Oberseite hin genutzt werden, nicht berücksichtigt werden. In diesem vereinfachten Fall liegen also 14 Einheiten vor, welche individuell angesteuert werden sollen.

Wie eingangs erwähnt, war es in einem derartigen Fall bislang üblich, bei Leuchten mit mehreren getrennt einstellbaren Leuchteinheiten für jede Einheit eine individuelle DALI-Betriebsadresse zu vergeben. Eine derartige Vorgehensweise würde im vorliegenden Fall also dazu führen, dass die Leuchte 100 bereits in der vereinfachten Version, in der nicht zwischen gerichteter und diffuser Lichtabgabe unterschieden und auf eine Indirektbeleuchtung verzichtet wird, 14 Betriebsadressen des DALI-Systems belegt. Dies bedeutet nicht nur, dass an einem entsprechenden DALI-System dann maximal vier derartiger Leuchten angeschlossen werden könnten (da max. 64 Adressen zur Verfügung stehen), sondern auch, dass zur Einstellung der Helligkeit aller Module eine umfangreiche Übermittlung von Daten erforderlich wäre. Da allerdings die Kommunikation entsprechend dem DALI-Standard verhältnismäßig langsam ist, wäre eine derartige Vorgehensweise bei der hier dargestellten Leuchte offensichtlich nicht praktikabel.

Erfindungsgemäß wird deshalb ein völlig neuartiges Konzept zum Ansteuern der Leuchte, genauer genommen der einzelnen Leuchtmodule vorgeschlagen, welches nachfolgend näher erläutert werden soll.

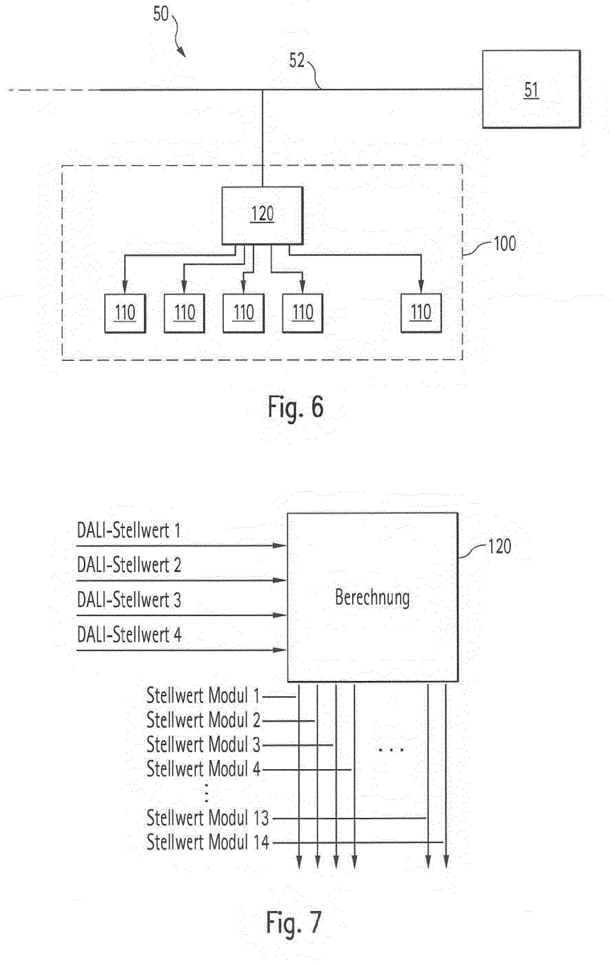

Die der Erfindung zugrundeliegende Problemstellung ist schematisch nochmals in Figur 6 dargestellt. Gezeigt ist hier ein DALI-System 50, welches eine zentrale Steuereinheit 51 aufweist, von der sich ausgehend die Busleitung 52 des Systems erstreckt. An diese Busleitung 52 ist u.a. die Leuchte 100 angeschlossen, welche intern eine Steuereinheit 120 aufweist, die für die Kommunikation mit der zentralen Steuereinheit 51 vorgesehen ist. Von der Steuereinheit 51 ausgegebene DALI-Befehle werden also von der internen Steuereinheit 120 der Leuchte 100 empfangen und umgesetzt, derart, dass die Module 110 mit der gewünschten Helligkeit betrieben werden.

In welcher Art und Weise hierbei die Steuereinheit 120 die einzelnen Module 110 dazu veranlasst, die letztendlich gewünschte Helligkeit anzunehmen, spielt für die vorliegende Erfindung eine eher untergeordnete Rolle. Es könnte bspw. vorgesehen sein, dass jedes Modul 110 individuell von der Steuereinheit 120 mit einem bereits entsprechend ausgelegten Strom versorgt wird. Denkbar wäre allerdings auch, dass die Steuereinheit 120 lediglich interne Helligkeitsbefehle an die Module 110 ausgibt, die dann wiederum selbstständig die entsprechende Helligkeit annehmen. In allen Varianten ist allerdings erforderlich, dass innerhalb der Leuchte 100 bzw. der Steuereinheit 120 für jedes einzelne Modul 110 Helligkeitssollwerte bestimmt werden, welche nachfolgend als interne Helligkeitssollwerte bezeichnet werden. Die Erfindung betrifft die Aufgabenstellung, in möglichst einfacher und effizienter Weise diese internen Helligkeitssollwerte zur Verfügung zu stellen bzw. zu ermitteln.

Die erfindungsgemäße Lösung beruht auf dem Gedanken, durch die zentrale Steuereinheit 51 des DALI-Systems 50 nur eine geringe Anzahl von externen Helligkeitssollwerten zu übermitteln, aus diesen wenigen externen Helligkeitssollwerten dann allerdings individuelle interne Helligkeitssollwerte für alle einzelnen Einheiten 110 zu generieren. Schematisch ist diese Vorgehensweise in Figur 7 dargestellt. Der Steuereinheit 120 der Leuchte werden also extern unter Nutzung unterschiedlicher Betriebsadressen mehrere DALI-Helligkeitssollwerte (DALI-Stellwerte), im vorliegenden Fall bspw. vier Helligkeitswerte zugeführt. Die Steuereinheit 120 bildet aus diesen vier externen Helligkeitswerten nunmehr jedoch für jedes Leuchtmodul 110 einen individuellen internen Helligkeitssollwert (Stellwert Modul 1, Stellwert Modul 2 usw.) und gibt diesen dann an das entsprechende Leuchtmodul 110 aus bzw. steuert dieses in entsprechender Weise an.

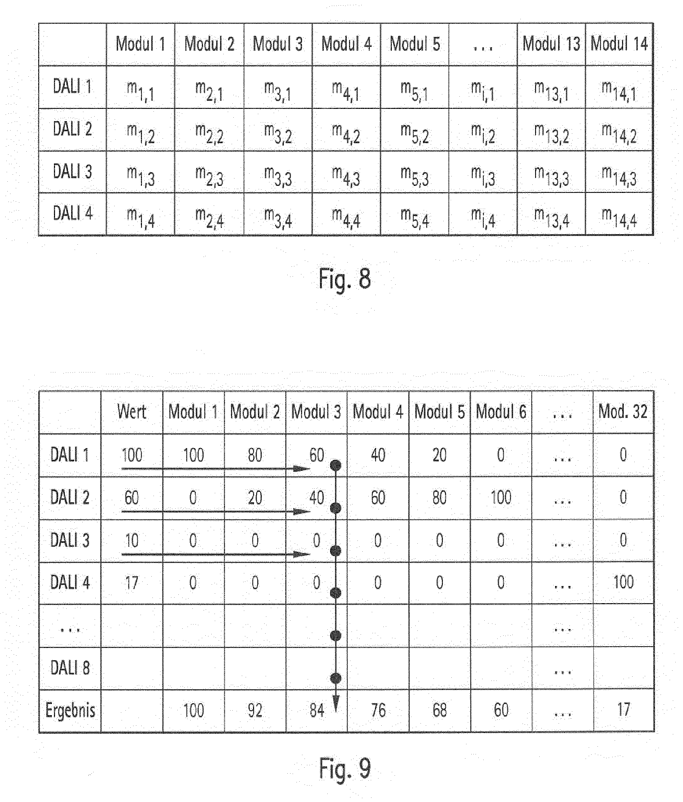

Die Besonderheit der erfindungsgemäßen Vorgehensweise besteht dabei darin, dass im Prinzip für jeden individuellen internen Helligkeitssollwert, der an eines der Leuchtmodule 110 ausgegeben wird, alle extern zugeführten DALI-Helligkeitsstellwerte berücksichtigt werden. Dies erfolgt über Gewichtungsfaktoren, die jeweils einen Zusammenhang zwischen den externen Werten und dem anzusteuernden Leuchtmodul herstellen. Diese Gewichtungswerte können in einer Matrix zusammengefasst werden, wie sie beispielhaft in Figur 8 dargestellt ist.

Wie erkennbar ist, enthält die Matrix eine bestimmte Anzahl von Zeilen, die der Anzahl der extern zugeführten Helligkeitssollwerte entspricht. Für den obigen Fall, dass vier DALI-Werte zugeführt werden, würde also die Matrix zunächst vier Zeilen enthalten, die jeweils einer von der Leuchte 100 genutzten DALI-Adresse entsprechen. Ferner sind Spalten vorgesehen, wobei jede Spalte jeweils einem anzusteuernden Leuchtmodul entspricht. Im vorliegenden Ausführungsbeispiel bedeutet dies also, dass die Matrix, wie dargestellt, 14 Spalten beinhaltet, wobei offensichtlich die Bedeutung zwischen den Zeilen und Spalten auch vertauscht werden könnte. Der Matrixeintrag $m_{i,j}$ einer bestimmten Kombination aus Spalte i und Zeile j definiert dabei, inwiefern der der Zeile entsprechende externe Helligkeitssollwert die Lichtabgabe des der Spalte zugehörigen Leuchtmoduls beeinflusst. Es handelt sich beispielsweise um Prozentangaben, mit denen der zugehörige externe Helligkeitssollwert gewichtet wird.

In mathematischer Hinsicht ergibt sich damit für einen intern zu berechnenden Helligkeitssollwert $S_i$ für ein bestimmtes Leuchtmodul mit der Nummer i der folgende Zusammenhang:

$$S_i = \frac{1}{100} \sum_{j=1}^{j\,\max} m_{ij} \cdot d_j$$

wobei $m_{ij}$ wie bereits erwähnt dem Gewichtungsfaktor der i-ten Spalte und der j-ten Zeile der Gewichtungsmatrix entspricht und $d_j$ den DALI-Helligkeitssollwert der j-ten Adresse darstellt. Letztendlich werden also die mit den Gewichtungswerten der Matrix gewichteten externen Helligkeitssollwerte zu dem internen Sollwert summiert und ggf. normiert. Ein Berechnungsbeispiel hierfür ist in Figur 9 gezeigt, wobei die Matrix nunmehr für acht externe Helligkeitssollwerte und darauf basierend 32 zu berechnende interne Helligkeitssollwerte ausgelegt ist.

Die Einträge der Matrix innerhalb einer Spalte sollten dementsprechend in Summe immer 100 ergeben, sofern die Angaben der Gewichtungswerte in Prozent erfolgt. Da die Matrix allerdings digital gespeichert wird, kann zur besseren Ausnutzung des Speichers auch vorgesehen sein, dass für die Gewichtung Werte zwischen 0 und 200 vergeben werden. Dementsprechend muss dann allerdings der Endwert der Summe durch 200 statt durch 100 geteilt werden. Die gewichtete Summe muss also abhängig von dem Wertebereich für die Gewichtungswerte entsprechend normiert werden.

Mit Hilfe der zuvor beschriebenen Vorgehensweise und der Gewichtungsmatrix kann also aus einer relativ geringen Anzahl von extern zugeführten DALI-Helligkeitssollwerten eine Vielzahl von internen Helligkeitssollwerten zur Ansteuerung der einzelnen Leuchtmodule berechnet werden. Durch die Einträge der Gewichtungsmatrix werden dabei in erster Linie bestimmte Muster hinsichtlich des Helligkeitsverlaufs entlang der Leuchte vorgegeben. Wesentlich hierbei ist, dass bei dieser Vorgehensweise nach wie vor durch die von der zentralen Steuereinheit des Systems übermittelten Helligkeitssollwerte primär die Lichtabgabe der Leuchte vorgegeben wird. Es besteht also nach wie vor die Möglichkeit, extern in einfacher Weise Einfluss auf die Lichtabgabe der Leuchte zu nehmen.

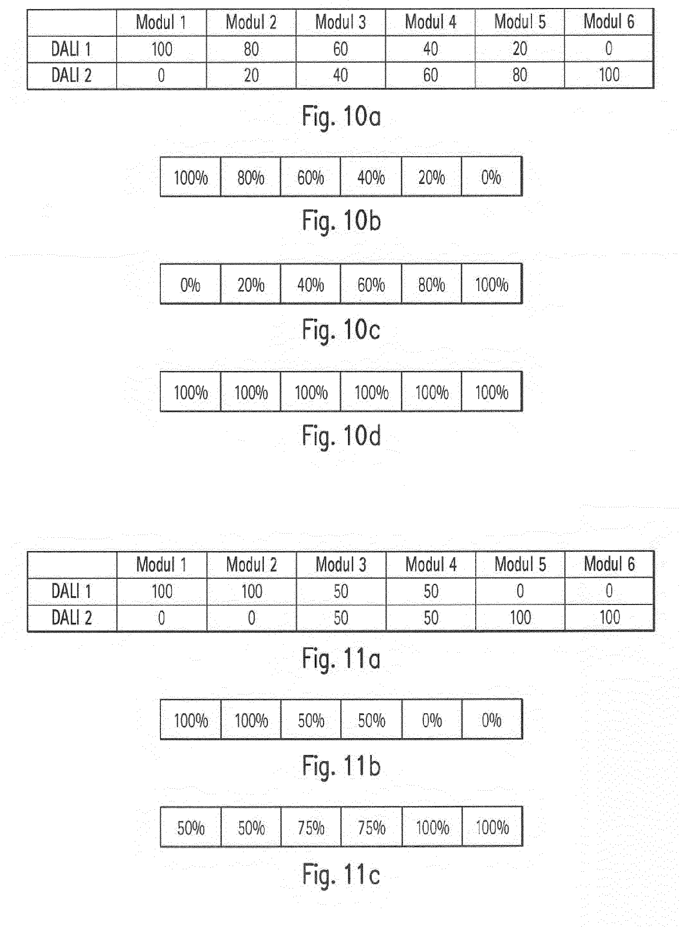

Verdeutlicht wird dies anhand der nachfolgend gezeigten Beispiele, der Figuren 10 bis 12, in denen jeweils davon ausgegangen wird, dass lediglich sechs Leuchtmodule zum Einsatz kommen, welche mit Hilfe von zwei externen Helligkeitssollwerten (DALI 1 und DALI 2) angesteuert werden sollen.

Bei dem Beispiel von Figur 10 wird dabei von der in Figur 10a dargestellten Matrix ausgegangen. Für den Fall, dass die beiden externen Helligkeitssollwerte wie folgt lauten: DALI 1 = 100; DALI 2 = 0, ergibt sich ein Helligkeitsverlauf über die sechs Leuchtmodule hinweg, wie er in Figur 10b dargestellt ist. Werden hingegen die externen Helligkeitswerte vertauscht (DALI 1 = 0; DALI 2 = 100), so ergibt sich bei identischer Matrix das Beleuchtungsszenario gemäß Figur 10c. Enthalten beide externen Helligkeitssollwerte den Maximalwert von 100, ergibt sich schließlich die Beleuchtung gemäß Figur 10d. Die bei diesem Beispiel zum Einsatz kommende Gewichtungsmatrix sorgt also eher für einen linearen Helligkeitsverlauf zwischen den Modulen.

Figur 11 zeigt ein weiteres Beispiel, welches von der Matrix gemäß Figur 11a ausgeht. Externe Helligkeitssollwerte DALI 1 = 100 und DALI 2 = 0 erzeugen nunmehr das Erscheinungsbild gemäß Figur 11b, während hingegen die Lichtabgabe nach Figur 11c mit externen Helligkeitssollwerten DALI 1 = 50 und DALI 2 = 100 erzielt wird. Durch die Gewichtungsmatrix nach Figur 11a wird also eher ein abgestufter Helligkeitsübergang in Längsrichtung der Leuchte erzielt.

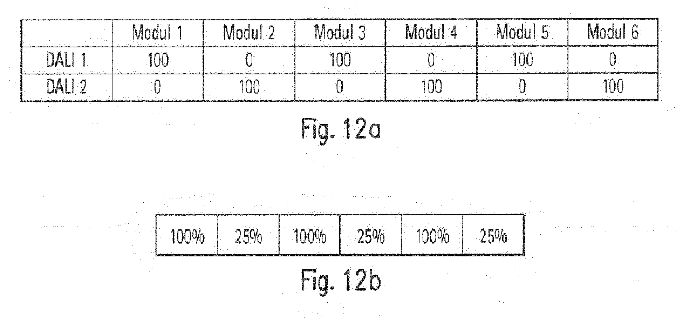

Schließlich zeigt das Beispiel der Figur 12, bei dem die Gewichtungsmatrix nach Figur 12a zum Einsatz kommt, dass bei entsprechender Matrix auch deutlich andere Beleuchtungsmuster erzielt werden können. So wird die Lichtabgabe gemäß Figur 12b im dargestellten Beispiel mit den externen Helligkeitssollwerten DALI 1 = 100 und DALI 2 = 25 erzielt.

Die Matrixeinträge haben also primär Einfluss auf den Verlauf der Helligkeit zwischen den benachbarten Leuchtmodulen der Leuchte, so dass die Möglichkeiten zur individuellen Ansteuerung der Module trotz deutlich geringerem Aufwand bei der Datenübermittlung nur geringfügig beeinträchtigt werden. Damit bietet die erfindungsgemäße Lösung die Möglichkeit, eine Leuchte, wie sie in den Figuren 1 bis 5 dargestellt ist, in einfacher aber effizienter Weise anzusteuern.

Anzumerken ist dabei, dass - wie in den Beispielen gezeigt- einzelne Gewichtungswerte der Matrix durchaus auch den Wert 0 annehmen können, so dass in diesem Fall dann der zugehörige externe Helligkeitssollwert keinen Beitrag zu dem internen Helligkeitssollwert liefert. Trotz allem erfolgt die Berechnung eines internen Helligkeitssollwerts immer auf Basis aller externen Helligkeitssollwerte, da die Steuereinheit selbstverständlich nicht vorab überprüft, ob einer der Matrixeinträge gleich 0 ist oder nicht.

Während des Betriebs greift die Leuchte bzw. die interne Steuereinheit auf eine einzelne Gewichtungsmatrix zurück. Vorzugsweise sind allerdings in der Steuereinheit der Leuchte in einem Speicher mehrere Gewichtungsmatrizen abgelegt, welche wahlweise abgerufen und ggf. auch verändert werden können. Vorzugsweise sind dabei einige Grundprinzipien des Helligkeitsverlaufs (stufenartiger Verlauf, linearer Verlauf oder dergleichen) als unveränderte Matrizen abgelegt, so dass sie immer im Bedarfsfall zur Verfügung stehen. Ergänzend können dann weitere, ggf. individuell konfigurierbare Matrizen zur Verfügung stehen, welche durch den Verbraucher je nach Wunsch programmiert werden können. Die Auswahl und/oder Programmierung einer Matrix kann dabei durch spezielle Sonderbefehle des DALI-Standards erfolgen, welche die Möglichkeit eröffnen, auf den Speicherbereich der Steuereinheit zuzugreifen.

Ergänzend hierzu kann auch in einem speziellen Modus eine Einzelansteuerung der Einheiten vorgenommen werden, indem zunächst aus den vorab gespeicherten Matrizen eine sogenannte Basismatrize ausgewählt wird, bei der die Gewichtungswerte derart sind, dass ein Teil der Einheiten individuell durch die externen Helligkeitssollwerte angesteuert wird. Diese Matrix enthält also dann in jeder Zeile (die einer DALI-Adresse entspricht) maximal einen von 0 abweichenden Eintrag (in der Regel 100). Nach Übermittlung der externen Helligkeitssollwerte und Einstellen der Helligkeiten der Leuchteinheiten wird dann die Matrix modifiziert, so dass nunmehr weitere Einheiten individuell angesteuert werden können. Dies wird solange wiederholt, bis jede Einheit eine individuelle Helligkeit angenommen hat. Eine Besonderheit bei dieser Einzelansteuerung besteht dabei darin, dass tatsächlich nur diejenigen Einheiten einen internen Helligkeitssollwert erhalten, zu denen in der Gewichtungsmatrix ein von 0 abweichender Eintrag enthalten ist, da andernfalls alle anderen Einheiten immer ausgeschaltet werden würden.

In den obigen Ausführungsbeispielen wurde wie bereits erwähnt davon ausgegangen, dass bei den einzelnen Leuchtmodulen der Leuchte nicht zwischen gerichteter und diffuser Lichtabgabe unterschieden wird, also insgesamt 14 individuell anzusteuernde Leuchteinheiten vorliegen. Dementsprechend weist die Gewichtungsmatrix gemäß Figur 8 auch wie oben erwähnt 14 Spalten auf. Offensichtlich kann allerdings das erfindungsgemäße Prinzip auch in einfacher Weise auf den Fall erweitert werden, dass zwischen gerichteter und diffuser Lichtabgabe unterschieden werden soll. In diesem Fall muss dann die Matrix erweitert werden auf insgesamt 28 Spalten, wobei dann jeweils zwei Spalten einem Modul zugehörig sind und eine Spalte die gerichtete Lichtabgabe betrifft und die andere Spalte die diffuse Lichtabgabe. Ferner könnte auch eine weitere Spalte für die Berechnung eines Helligkeitssollwerts für die indirekte Lichtabgabe vorgesehen sein.

Eine andere Erweiterung des erfindungsgemäßen Prinzips wäre denkbar, wenn die Lichtquellen eines Moduls durch getrennt voneinander ansteuerbare RGB-Module gebildet sind, also durch getrenntes Einstellen der drei Grundfarben Rot, Grün und Blau ein Mischlicht eines beliebigen Farbtons oder einer Farbtemperatur generiert werden soll. Wiederum müsste dann anstelle einer einzelnen Spalte mit entsprechenden Gewichtungseinträgen in der Matrix eine Vervielfachung vorgenommen werden. Die Matrix muss also immer so viele Spalten beinhalten, wie getrennt voneinander ansteuerbare Leuchtmittel oder Leuchtmittelgruppen zum Einsatz kommen sollen. Der Begriff Leuchteinheit bezeichnet dabei jeweils eine derartige individuell ansteuerbare Leuchtmittelgruppe bzw. ein individuell ansteuerbare Leuchtmittel.

Wie bereits eingangs erwähnt, unterstützt der DALI-Standard auch sog. Szene-Befehle, mit denen keine Helligkeitswerte übermittelt sondern stattdessen die empfangenden Einheiten dazu veranlasst werden, vorab gespeicherte Helligkeitswerte abzurufen. Dies kann in gleicher Weise auch bei dem erfindungsgemäßen Konzept erfolgen, wobei vorzugsweise vorgesehen ist, dass zumindest bei bestimmten Szenen zusätzlich auch die Information hinterlegt ist, welche dazugehörige Gewichtungsmatrix ausgewählt werden soll. Erst durch das korrekte Zusammenwirken zwischen den vorab hinterlegten DALI-Helligkeitswerten, welche - im Sinne des DALI-Standards - die Szene definieren, und der zugehörigen Gewichtungsmatrix ist sichergestellt, dass sich auch tatsächlich das gewünschte Helligkeitsbild ergibt.

Eine andere Weiterbildung des erfindungsgemäßen Konzepts kann darin bestehen, dass durch den Endverbraucher ausgewählt werden kann, wie viele DALI-Adressen durch die Leuchte belegt werden sollen. Im obigen Beispiel gemäß Figur 9 war davon ausgegangen worden, dass die Leuchte bis zu acht DALI-Adressen belegen kann, mit deren Hilfe dann bis zu 32 Einheiten angesteuert werden können. Es kann allerdings durchaus erwünscht sein, dass die Leuchte weniger DALI-Adressen in Anspruch nimmt. In diesem Fall muss also eine entsprechende Matrix gewählt werden, welche weniger Zeilen nutzt. Aus praktischen Gründen sind allerdings im Speicher der Steuereinheit grundsätzlich Matrizen gleicher Größe abgespeichert, wobei dann allerdings bei einer Reduzierung der genutzten DALI-Adressen ausschließlich die entsprechenden Zeilen genutzt werden. D.h., sollte sich der Verbraucher dazu entscheiden, lediglich vier DALI-Adressen zu nutzen, so sind in der zugehörigen Gewichtungsmatrix auch tatsächlich nur die ersten vier Zeilen mit Einträgen versehen, die vier weiteren Zeilen enthalten ausschließlich Nullen als Einträge. Damit wird die Flexibilität weiter erhöht, da der Verbraucher je nach Anzahl der in dem System zur Verfügung stehenden Adressen individuell auswählen kann, wie viele Adressen durch die Leuchte tatsächlich genutzt werden sollen.

In diesem Zusammenhang ist anzumerken, dass bislang immer davon ausgegangen wurde, dass die extern zugeführten Helligkeitssollwerte jeweils einzeln unter Nutzung unterschiedlicher Betriebsadressen übermittelt werden. Dies stellt tatsächlich die am einfachsten zu realisierende Vorgehensweise dar. Es wäre allerdings auch denkbar, dass die externen Werte nacheinander immer unter der gleichen DALI-Adresse übermittelt werden und die Steuereinheit diese zunächst zwischenspeichert. Erst nachdem das vollständige Paket, also alle externen Helligkeitssollwerte empfangen und gespeichert wurden, kann dann wiederum in der oben beschriebenen Weise die Berechnung der internen Helligkeitssollwerte für die anzusteuernden Einheiten vorgenommen werden. In diesem Fall kann die Anzahl der zu belegenden Adressen durch die Leuchte also weiter- im Extremfall auf eine Adresse - reduziert werden.

Dabei ist ferner zu berücksichtigen, dass durch die Übermittlung neuer externer Helligkeitssollwerte sich deutliche Veränderungen in der Lichtabgabe der Leuchte ergeben können. Um hierbei zu schnelle Änderungen zu vermeiden, kann vorgesehen sein, dass eine sich intern ergebende Stellwertdifferenz zwischen dem bisherigen Sollwert und einem neu berechneten Sollwert in mehreren - z.B. 8 - Einzelschritten über einen Zeitraum von etwa 250ms realisiert wird. Ändert sich während dieses Übergangs der Zielwert (aufgrund des Empfangs eines weiteren externen Stellwerts), so wird der Vorgang neu gestartet, d.h. der letzte ausgegebene Wert ist der Startwert und die Differenz zum Zielwert wird wiederum 8 Einzelschritten ausgegeben. Dies kann beispielsweise für den Fall gelten, dass unmittelbar nach Empfang eines externen Sollwerts sofort die internen Sollwerte berechnet werden. Es wäre allerdings auch denkbar, dass die Berechnung erst erfolgt, nachdem alle externen Sollwerte empfangen wurden. In diesem Fall wird also die gesamte Matrix neu geladen und es wird ein nochmals langsamerer Übergang angestrebt, um Effekte durch langsamere DALI-Werteübermittlungen, welche in kurzem Aufblitzen resultieren könnten, sicher zu vermeiden. Der Zielwert wird in diesem Fall beispielsweise in 32 Einzelschritte angesteuert und der vollständige Übergang benötigt in diesem Fall etwa 1 Sekunde.

Ändert sich währenddessen der Zielwert erneut, so kann wiederum der Vorgang erneut gestartet werden, wobei der letzte ausgegebene Wert der neue Startwert ist.

Letztendlich führt also die erfindungsgemäße Lösung zur deutlichen Verbesserung bei der Ansteuerung komplexerer Leuchten. Dabei ist darauf hinzuweisen, dass die Kommunikation zwischen zentraler Steuereinheit und Leuchte selbstverständlich nicht zwingend gemäß dem DALI-Standard erfolgen muss, sondern auch andere Kommunikationsstandards hierfür genutzt werden könnten. Trotz allem stellt der Einsatz in einem DALI-System ein besonders bevorzugtes Ausführungsbeispiel der Erfindung dar, da hier die beschriebenen Vorteile besonders zum Tragen kommen.

**Patentansprüche**

**1.** Verfahren zum Betreiben einer Leuchte (100) mit mehreren individuell steuerbaren Einheiten zur Lichtabgabe (110),

> wobei die Leuchte (100) weiterhin ein Steuergerät (120) aufweist,
> wobei dem Steuergerät (120) der Leuchte (100) mehrere externe Helligkeitssollwerte übermittelt werden und vom Steuergerät (120) empfangen werden, und
> wobei vom Steuergerät (120) für jede der individuell steuerbaren Einheiten zur Lichtabgabe (110) jeweils auf Basis aller empfangenen externen Helligkeitssollwerte unter Berücksichtigung zugehöriger Gewichtungsfaktoren der jeweiligen individuell steuerbaren Einheit ein jeweiliger interner Helligkeitssollwert ermittelt wird,
> wobei zum Ermitteln des jeweiligen internen Helligkeitssollwerts für jede der individuell steuerbaren Einheiten zur Lichtabgabe (110) jeder empfangene externe Helligkeitssollwert mit einem jeweiligen zugehörigen Gewichtungsfaktor ($m_{ij}$) der zugehörigen Gewichtungsfaktoren multipliziert wird und der jeweilige interne Helligkeitssollwert die Summe der gewichteten externen Helligkeitssollwerte ist, wobei jede der mehreren individuell steuerbaren Einheiten zur Lichtabgabe (110) entsprechend des jeweiligen ermittelten internen Helligkeitssollwerts durch das Steuergerät (120) angesteuert wird,
**dadurch gekennzeichnet,**
**dass** die Gewichtungsfaktoren in Form einer Gewichtungsmatrix zusammengefasst und in der Steuereinheit (120) der Leuchte (100) gespeichert sind.

2. Verfahren nach Anspruch 1,
**dadurch gekennzeichnet,**

**dass** in der Leuchte (100) mehrere Gewichtungsmatrizen gespeichert sind, welche durch einen Benutzer auswählbar sind,
wobei vorzugsweise zumindest eine der gespeicherten Gewichtungsmatrizen durch den Benutzer veränderbar ist und
wobei besonderes bevorzugt die Anzahl der der Leuchte (100) zu übermittelnden externen Helligkeitssollwerte durch den Benutzer einstellbar ist, und wobei auf Basis der von dem Steuergerät empfangenen Anzahl externer Helligkeitssollwerte jeweils eine der Anzahl der empfangenen externen Helligkeitssollwerte zugehörige Gewichtungsmatrix aus den mehreren gespeicherten Gewichtungsmatrizen gewählt wird.

3. Verfahren nach einem der vorherigen Ansprüche,
**dadurch gekennzeichnet,**
**dass** der Steuereinheit (120) der Leuchte (100) die externen Helligkeitssollwerte der Leuchte (100) jeweils unter Verwendung unterschiedlicher Betriebsadressen der Leuchte (100) übermittelt werden.

4. Verfahren nach einem der Ansprüche 1 oder 2,
**dadurch gekennzeichnet,**
**dass** der Steuereinheit (120) der Leuchte (100) zumindest einige, vorzugsweise alle, der mehreren externen Helligkeitssollwerte der Leuchte (100) aufeinanderfolgend unter Nutzung einer identischen Betriebsadresse der Leuchte (100) übermittelt werden, wobei vorzugsweise eine Ermittlung der internen Helligkeitssollwerte erst dann erfolgt, wenn alle der mehreren externen Helligkeitssollwerte empfangen wurden.

5. Verfahren nach einem der vorherigen Ansprüche,
**dadurch gekennzeichnet,**
**dass** die Übermittlung der externen Helligkeitssollwerte durch DALI-Befehle erfolgt, wobei vorzugsweise bei Übermittlung eines DALI-Szenebefehls die Steuereinheit (120) dazu veranlasst wird, auf vorab in einem Speicher der Leuchte (100) hinterlegte Helligkeitssollwerte zuzugreifen, welche im Verfahren statt der empfangenen externen Helligkeitssollwerte zur Ermittlung der internen Helligkeitssollwerte verwendet werden, wobei ferner bei Übermittlung eines DALI-Szenebefehls durch die Leuchte (100) gleichzeitig einer gewählten Szene entsprechende Gewichtungsfaktoren gewählt werden.

6. Steuereinheit (120) für eine Leuchte (100), welche mehrere individuell steuerbare Einheiten zur Lichtabgabe (110) aufweist,

wobei die Steuereinheit (120) der Leuchte (100) dazu ausgebildet ist, mehrere externe Helligkeitssollwerte zu empfangen und für jede der individuell steuerbaren Einheiten zur Lichtabgabe (110) jeweils auf Basis aller empfangenen externen Helligkeitssollwerte unter Berücksichtigung zugehöriger Gewichtungsfaktoren einen jeweiligen internen Helligkeitssollwert zu ermitteln,
wobei die Steuereinheit (120) dazu ausgebildet ist, zum Ermitteln des jeweiligen internen Helligkeitssollwerts jeden empfangenen externen Helligkeitssollwert mit einem zugehörigen Gewichtungsfaktor ($m_{ij}$) der zugehörigen Gewichtungsfaktoren zu multiplizieren und anschließend die Summe der gewichteten externen Helligkeitssollwerte zu bilden,
wobei der jeweilige interne Helligkeitssollwert die Summe der jeweiligen gewichteten externen Helligkeitssollwerte ist,
wobei die Steuereinheit (120) ferner dazu ausgebildet ist, die mehreren individuell steuerbaren Einheiten zur Lichtabgabe (110) entsprechend des jeweiligen ermittelten internen Helligkeitssollwerts anzusteuern,
**dadurch gekennzeichnet,**
**dass** die Gewichtungsfaktoren in Form einer Gewichtungsmatrix zusammengefasst und in einem Speicher der Steuereinheit (120) gespeichert sind.

7. Steuereinheit nach Anspruch 6,
**dadurch gekennzeichnet,**

**dass** mehrere Gewichtungsmatrizen gespeichert sind, welche durch einen Benutzer auswählbar sind,
wobei vorzugsweise zumindest eine der gespeicherten Gewichtungsmatrizen durch den Benutzer veränderbar ist und
wobei besonders bevorzugt mehrere Gewichtungsmatrizen gespeichert sind, welche unterschiedlichen Anzahlen von externen Helligkeitssollwerten entsprechen, wobei die Steuereinheit (120) dazu ausgebildet ist, auf Basis einer vom Benutzer einstellbaren Anzahl der empfangenen externen Helligkeitssollwerte eine der Anzahl der empfangenen externen Helligkeitssollwerte zugehörige Gewichtungsmatrix aus den mehreren gespeicherten Gewichtungsmatrizen zu wählen.

8. Steuereinheit nach einem der Ansprüche 6 oder 7,
**dadurch gekennzeichnet,**

**dass** die Steuereinheit (120) dazu ausgebildet ist, die mehreren externen Helligkeitssollwerte jeweils unter Verwendung unterschiedlicher Betriebsadressen der Leuchte (100) zu empfangen, oder
**dass** die Steuereinheit (120) dazu ausgebildet ist, zumindest einige, vorzugsweise alle, der mehreren externen Helligkeitssollwerte aufeinanderfolgend unter Nutzung einer identischen Betriebsadresse der Leuchte (100) zu empfangen und vorzugsweise die internen Helligkeitssollwerte erst nach Empfang aller mehreren externen Helligkeitssollwerte zu ermitteln.

9. Steuereinheit nach einem der Ansprüche 6 bis 8,
**dadurch gekennzeichnet,**

**dass** die Steuereinheit (120) dazu ausgebildet ist, die externen Helligkeitssollwerte in Form von DALI-Befehlen zu empfangen,
wobei vorzugsweise die Steuereinheit (120) dazu ausgebildet ist, bei Empfang eines DALI-Szenebefehls auf vorab in einem Speicher der Leuchte (100) hinterlegte Helligkeitssollwerte zuzugreifen, welche statt der empfangenen externen Helligkeitssollwerte zur Ermittlung der internen Helligkeitssollwerte verwendet werden, und ferner bei Übermittlung eines DALI-Szenebefehls gleichzeitig einer gewählten Szene entsprechende Gewichtungsfaktoren zu verwenden.

10. Leuchte (100), welche mehrere individuell steuerbare Einheiten zur Lichtabgabe (110) aufweist,
sowie einer Steuereinheit zum Ermitteln von internen Helligkeitssollwerten für die Einheiten (110) gemäß einem der Ansprüche 6 bis 9.

11. Beleuchtungssystem (50) mit einer zentralen Steuereinheit (50) sowie mindestens einer Leuchte (100) gemäß Anspruch 10.

## Claims

1. Method for operating a luminaire (100) comprising a plurality of individually controllable units for light emission (110),

the luminaire (100) further comprising a control unit (120),
a plurality of external brightness setpoint values being transmitted to the control unit (120) of the luminaire (100) and received by the control unit (120), and
a relevant internal brightness setpoint value being established by the control device (120) for each of the individually controllable units for light emission (110), in each case on the basis of all received external brightness setpoint values, taking into account associated weighting factors of the relevant individually controllable unit, each received external brightness setpoint value being multiplied by a relevant associated weighting factor ($m_{ij}$) of the associated weighting factors to establish the relevant internal brightness setpoint value for each of the individually controllable units for light emission (110), and the relevant internal brightness setpoint value being the sum of the weighted external brightness setpoint values, each of the plurality of individually controllable units for light emission (110) being controlled by the control unit (120) in accordance with the relevant established internal brightness setpoint value,
**characterized in that**

the weighting factors are summarized in the form of a weighting matrix and stored in the control unit (120) of the luminaire (100).

2. Method according to claim 1,
**characterized in that**

a plurality of weighting matrices are stored in the luminaire (100), which can be selected by a user,
preferably at least one of the stored weighting matrices being modifiable by the user and
the number of external brightness setpoint values to be transmitted to the luminaire (100) being particularly preferably adjustable by the user, and a weighting matrix associated with the number of received external brightness setpoint values in each case being selected from the plurality of stored weighting matrices on the basis of the number of external brightness setpoint values received by the control device.

3. Method according to any of the preceding claims,
**characterized in that**
the external brightness setpoint values of the luminaire (100) are in each case transmitted to the control unit (120) of the luminaire (100) using different operating addresses of the luminaire (100).

4. Method according to either claim 1 or claim 2,
**characterized in that**
at least some, preferably all, of the plurality of external brightness setpoint values of the luminaire (100) are successively transmitted to the control unit (120) of the luminaire (100) using an identical operating address of the luminaire (100), the internal brightness setpoint values preferably only being established if all of the plurality of external brightness setpoint values have been received.

5. Method according to any of the preceding claims,
**characterized in that**
the transmission of the external brightness setpoint values is effected by DALI commands, the control unit (120) preferably being caused, when a DALI scene command is transmitted, to access brightness setpoint values previously stored in a memory of the luminaire (100), which are used in the method instead of the received external brightness setpoint values to establish the internal brightness setpoint values, weighting factors corresponding to a selected scene additionally being selected at the same time when a DALI scene command is transmitted by the luminaire (100).

6. Control unit (120) for a luminaire (100), which has a plurality of individually controllable units for light emission (110),

the control unit (120) of the luminaire (100) being designed to receive a plurality of external brightness setpoint values and to establish a relevant internal brightness setpoint value for each of the individually controllable units for light emission (110), in each case on the basis of all the received external brightness setpoint values, taking into account associated weighting factors,
the control unit (120) being designed to multiply each received external brightness setpoint value by an associated weighting factor ($m_{ij}$) of the associated weighting factors to establish the relevant internal brightness setpoint value and to then form the sum of the weighted external brightness setpoint values,
the relevant internal brightness setpoint value being the sum of the respective weighted external brightness setpoint values,
the control unit (120) being further designed to control the plurality of individually controllable units for light emission (110) in accordance with the relevant established internal brightness setpoint value,
**characterized in that**
the weighting factors are summarized in the form of a weighting matrix and stored in a memory of the control unit (120).

7. Control unit according to claim 6,
**characterized in that**

a plurality of weighting matrices are stored, which can be selected by a user,
preferably at least one of the stored weighting matrices being modifiable by the user and
a plurality of weighting matrices corresponding to different numbers of external brightness setpoint values particularly preferably being stored, the control unit (120) being designed to select a weighting matrix associated with the number of received external brightness setpoint values from the plurality of stored weighting matrices on the basis of a user-adjustable number of the received external brightness setpoint values.

8. Control unit according to either claim 6 or claim 7,
**characterized in that**

the control unit (120) is designed to receive the plurality of external brightness setpoint values, in each case using different operating addresses of the luminaire (100), or
**in that** the control unit (120) is designed to receive at least some, preferably all, of the plurality of external brightness setpoint values successively using an identical operating address of the luminaire (100), and preferably to establish the internal brightness setpoint values only after receiving all of the plurality of external brightness setpoint values.

9. Control unit according to any of claims 6 to 8,
**characterized in that**

the control unit (120) is designed to receive the external brightness setpoint values in the form of DALI commands, the control unit (120) preferably being designed, when a DALI scene command is received, to access brightness setpoint values previously stored in a memory of the luminaire (100), which are used instead of the received external brightness setpoint values to establish the internal brightness setpoint values, and furthermore to use weighting factors corresponding to a selected scene at the same time when a DALI scene command is transmitted.

10. Luminaire (100), which has a plurality of individually controllable units for light emission (110), and a control unit for establishing internal brightness setpoint values for the units (110) according to any of claims 6 to 9.

11. Lighting system (50) having a central control unit (50) and at least one luminaire (100) according to claim 10.

**Revendications**

1. Procédé permettant de faire fonctionner un luminaire (100) comportant plusieurs unités commandables individuellement pour l'émission de lumière (110),

le luminaire (100) présentant en outre un appareil de commande (120),
plusieurs valeurs de consigne externes de luminosité étant transmises à l'appareil de commande (120) du luminaire (100) et étant reçues par l'appareil de commande (120), et
une valeur de consigne interne de luminosité respective étant déterminée par l'appareil de commande (120) pour chacune des unités commandables individuellement pour l'émission de lumière (110), respectivement sur la base de toutes les valeurs de consigne externes de luminosité reçues en tenant compte de facteurs de pondération associés de l'unité commandable individuellement respective, pour la détermination de la valeur de consigne interne de luminosité respective pour chacune des unités commandables individuellement pour l'émission de lumière (110), chaque valeur de consigne externe de luminosité reçue étant multipliée par un facteur de pondération ($m_{ij}$) respectif associé des facteurs de pondération associés et la valeur de consigne interne de luminosité respective étant la somme des valeurs de consigne externes de luminosité pondérées, chacune des unités commandables individuellement pour l'émission de lumière (110) étant commandée par l'appareil de commande (120) conformément à la valeur de consigne interne de luminosité respective déterminée,
**caractérisé en ce**
**que** les facteurs de pondération sont regroupés sous la forme d'une matrice de pondération et sont mémorisés dans l'unité de commande (120) du luminaire (100).

2. Procédé selon la revendication 1,
**caractérisé en ce**

**que** plusieurs matrices de pondération sont mémorisées dans le luminaire (100), lesquelles peuvent être sélectionnées par un utilisateur,
de préférence, au moins l'une des matrices de pondération mémorisées étant modifiable par l'utilisateur et

de manière particulièrement préférée, le nombre de valeurs de consigne externes de luminosité à transmettre au luminaire (100) étant réglable par l'utilisateur, et, sur la base du nombre de valeurs de consigne externes de luminosité reçues par l'appareil de commande, respectivement une matrice de pondération associée au nombre de valeurs de consigne externes de luminosité reçues étant sélectionnée parmi les matrices de pondération mémorisées.

3. Procédé selon l'une des revendications précédentes,
**caractérisé en ce**
**que** les valeurs de consigne externes de luminosité du luminaire (100) sont transmises à l'unité de commande (120) du luminaire (100) respectivement à l'aide d'adresses de fonctionnement différentes du luminaire (100).

4. Procédé selon l'une des revendications 1 ou 2,
**caractérisé en ce**
**que** au moins quelques-unes des valeurs de consigne externes de luminosité, de préférence toutes les valeurs de consigne externes de luminosité, du luminaire (100) sont transmises successivement à l'unité de commande (120) du luminaire (100) à l'aide d'une adresse de fonctionnement identique du luminaire (100), une détermination des valeurs de consigne internes de luminosité n'étant de préférence effectuée que lorsque toutes les valeurs de consigne externes de luminosité ont été reçues.

5. Procédé selon l'une des revendications précédentes,
**caractérisé en ce**
**que** la transmission des valeurs de consigne externes de luminosité s'effectue par des instructions DALI, l'unité de commande (120) étant de préférence amenée, lors de la transmission d'une instruction de scène DALI, à accéder à des valeurs de consigne de luminosité enregistrées au préalable dans une mémoire du luminaire (100), lesquelles valeurs de consigne sont utilisées dans le procédé à la place des valeurs de consigne externes de luminosité reçues pour la détermination des valeurs de consigne internes de luminosité, des facteurs de pondération correspondant à une scène sélectionnée étant en outre choisis simultanément lors de la transmission d'une instruction de scène DALI par le luminaire (100).

6. Unité de commande (120) pour un luminaire (100) qui présente plusieurs unités commandables individuellement pour l'émission de lumière (110),

l'unité de commande (120) du luminaire (100) étant configurée pour recevoir plusieurs valeurs de consigne externes de luminosité et pour déterminer, pour chacune des unités commandables individuellement pour l'émission de lumière (110), une valeur de consigne interne de luminosité respective respectivement sur la base de toutes les valeurs de consigne externes de luminosité reçues en tenant compte de facteurs de pondération associés,
l'unité de commande (120) étant configurée pour, afin de déterminer la valeur de consigne interne de luminosité respective, multiplier chaque valeur de consigne externe de luminosité reçue par un facteur de pondération ($m_{ij}$) associé des facteurs de pondération associés et pour former ensuite la somme des valeurs de consigne externes de luminosité pondérées,
la valeur de consigne interne de luminosité respective étant la somme des valeurs de consigne externes de luminosité pondérées respectives,
l'unité de commande (120) étant en outre configurée pour commander les unités commandables individuellement pour l'émission de lumière (110) conformément à la valeur de consigne interne de luminosité déterminée respective,
**caractérisée en ce**
**que** les facteurs de pondération sont regroupés sous la forme d'une matrice de pondération et sont mémorisés dans une mémoire de l'unité de commande (120).

7. Unité de commande selon la revendication 6,
**caractérisée en ce**

**que** plusieurs matrices de pondération sont mémorisées, lesquelles peuvent être sélectionnées par un utilisateur,
de préférence, au moins l'une des matrices de pondération mémorisées étant modifiable par l'utilisateur et
de manière particulièrement préférée, plusieurs matrices de pondération correspondant à différents nombres de valeurs de consigne externes de luminosité étant mémorisées, l'unité de commande (120) étant configurée pour sélectionner, sur la base d'un nombre réglable par l'utilisateur de valeurs de consigne externes de luminosité reçues, une matrice de pondération associée au nombre de valeurs de consigne externes de luminosité reçues parmi les matrices de pondération mémorisées.

8. Unité de commande selon l'une des revendications 6 ou 7,
**caractérisée en ce**

**que** l'unité de commande (120) est configurée pour recevoir les valeurs de consigne externes de luminosité respectivement à l'aide d'adresses de fonctionnement différentes du luminaire (100), ou
**que** l'unité de commande (120) est configurée pour recevoir successivement au moins quelques-unes des valeurs de consigne externes de luminosité, de préférence toutes les valeurs de consigne externes de luminosité, à l'aide d'une adresse de fonctionnement identique du luminaire (100) et de préférence pour déterminer les valeurs de consigne internes de luminosité seulement après réception de toutes les valeurs de consigne externes de luminosité.

9. Unité de commande selon l'une des revendications 6 à 8,
**caractérisée en ce**

**que** l'unité de commande (120) est configurée pour recevoir les valeurs de consigne externes de luminosité sous la forme d'instructions DALI,
l'unité de commande (120) étant de préférence configurée pour accéder, lors de la réception d'une instruction de scène DALI, à des valeurs de consigne de luminosité enregistrées au préalable dans une mémoire du luminaire (100), lesquelles valeurs de consigne sont utilisées à la place des valeurs de consigne externes de luminosité reçues pour la détermination des valeurs de consigne internes de luminosité, et en outre pour utiliser simultanément des facteurs de pondération correspondant à une scène sélectionnée lors de la transmission d'une instruction de scène DALI.

10. Luminaire (100) qui présente plusieurs unités commandables individuellement pour l'émission de lumière (110), ainsi qu'une unité de commande pour la détermination de valeurs de consigne internes de luminosité pour les unités (110) selon l'une des revendications 6 à 9.

11. Système d'éclairage (50) comportant une unité de commande centrale (50) ainsi qu'au moins un luminaire (100) selon la revendication 10.

Fig. 1

Fig. 2

Fig. 3

Fig. 4

Fig. 5

50

52

51

120

100

110  110  110  110  110

Fig. 6

DALI-Stellwert 1

DALI-Stellwert 2

DALI-Stellwert 3

DALI-Stellwert 4

120

Berechnung

Stellwert Modul 1

Stellwert Modul 2

Stellwert Modul 3

Stellwert Modul 4

Stellwert Modul 13

Stellwert Modul 14

. . .

Fig. 7

| | Modul 1 | Modul 2 | Modul 3 | Modul 4 | Modul 5 | ... | Modul 13 | Modul 14 |
|---|---|---|---|---|---|---|---|---|
| DALI 1 | $m_{1,1}$ | $m_{2,1}$ | $m_{3,1}$ | $m_{4,1}$ | $m_{5,1}$ | $m_{i,1}$ | $m_{13,1}$ | $m_{14,1}$ |
| DALI 2 | $m_{1,2}$ | $m_{2,2}$ | $m_{3,2}$ | $m_{4,2}$ | $m_{5,2}$ | $m_{i,2}$ | $m_{13,2}$ | $m_{14,2}$ |
| DALI 3 | $m_{1,3}$ | $m_{2,3}$ | $m_{3,3}$ | $m_{4,3}$ | $m_{5,3}$ | $m_{i,3}$ | $m_{13,3}$ | $m_{14,3}$ |
| DALI 4 | $m_{1,4}$ | $m_{2,4}$ | $m_{3,4}$ | $m_{4,4}$ | $m_{5,4}$ | $m_{i,4}$ | $m_{13,4}$ | $m_{14,4}$ |

Fig. 8

| | Wert | Modul 1 | Modul 2 | Modul 3 | Modul 4 | Modul 5 | Modul 6 | ... | Mod. 32 |
|---|---|---|---|---|---|---|---|---|---|
| DALI 1 | 100 | 100 | 80 | 60 | 40 | 20 | 0 | ... | 0 |
| DALI 2 | 60 | 0 | 20 | 40 | 60 | 80 | 100 | ... | 0 |
| DALI 3 | 10 | 0 | 0 | 0 | 0 | 0 | 0 | ... | 0 |
| DALI 4 | 17 | 0 | 0 | 0 | 0 | 0 | 0 | ... | 100 |
| ... | | | | | | | | | ... |
| DALI 8 | | | | | | | | | ... |
| Ergebnis | | 100 | 92 | 84 | 76 | 68 | 60 | ... | 17 |

Fig. 9

| | Modul 1 | Modul 2 | Modul 3 | Modul 4 | Modul 5 | Modul 6 |
|---|---|---|---|---|---|---|
| DALI 1 | 100 | 80 | 60 | 40 | 20 | 0 |
| DALI 2 | 0 | 20 | 40 | 60 | 80 | 100 |

Fig. 10a

| 100% | 80% | 60% | 40% | 20% | 0% |
|---|---|---|---|---|---|

Fig. 10b

| 0% | 20% | 40% | 60% | 80% | 100% |
|---|---|---|---|---|---|

Fig. 10c

| 100% | 100% | 100% | 100% | 100% | 100% |
|---|---|---|---|---|---|

Fig. 10d

| | Modul 1 | Modul 2 | Modul 3 | Modul 4 | Modul 5 | Modul 6 |
|---|---|---|---|---|---|---|
| DALI 1 | 100 | 100 | 50 | 50 | 0 | 0 |
| DALI 2 | 0 | 0 | 50 | 50 | 100 | 100 |

Fig. 11a

| 100% | 100% | 50% | 50% | 0% | 0% |
|---|---|---|---|---|---|

Fig. 11b

| 50% | 50% | 75% | 75% | 100% | 100% |
|---|---|---|---|---|---|

Fig. 11c

| | Modul 1 | Modul 2 | Modul 3 | Modul 4 | Modul 5 | Modul 6 |
|---|---|---|---|---|---|---|
| DALI 1 | 100 | 0 | 100 | 0 | 100 | 0 |
| DALI 2 | 0 | 100 | 0 | 100 | 0 | 100 |

Fig. 12a

| 100% | 25% | 100% | 25% | 100% | 25% |
|---|---|---|---|---|---|

Fig. 12b

20

**IN DER BESCHREIBUNG AUFGEFÜHRTE DOKUMENTE**

**In der Beschreibung aufgeführte Patentdokumente**

- EP 2247166 A2
- WO 2013110024 A1